# EUROPÄISCHE PATENTSCHRIFT

(11) **EP 2 185 829 B1**
(45) Veröffentlichungstag und Bekanntmachung des Hinweises auf die Patenterteilung: **22.02.2012**
(21) Anmeldenummer: 08801949.2
(22) Anmeldetag: 09.09.2008
(51) Int. Cl.: F16B 37/12, F16B 13/00

(54) **SCHRAUBANKER ZUM BEFESTIGEN VON ANBAUTEILEN IN BETON ODER MAUERWERK**
SCREW ANCHOR FOR FASTENING MOUNTED PARTS IN CONCRETE OR BRICKWORK
VIS D'ANCRAGE SERVANT A FIXER DES ELEMENTS RAPPORTES DANS DU BETON OU DANS UN OUVRAGE DE MAÇONNERIE

(30) Priorität: 10.09.2007 DE 102007042977
(43) Veröffentlichungstag der Anmeldung: 19.05.2010
(60) Teilanmeldung: 11178447.6
(73) Patentinhaber: Ludwig Hettich & Co., 78713 Schramberg-Sulgen (DE)
(72) Erfinder: HETTICH, Stefan, 78713 Schramberg (DE); HETTICH, Ulrich, 78713 Schramberg (DE)
(74) Vertreter: Liesegang, Eva
(86) Internationale Anmeldenummer: PCT/EP2008/007377
(87) Internationale Veröffentlichungsnummer: WO 2009/033637

(56) Entgegenhaltungen:
- AU-B2- 498 019
- DE-A1-102006 003 172
- DE-C- 812 487
- DE-U1-202005 015 860
- FR-A1- 2 341 059
- US-A- 2 520 232
- US-A1- 2004 258 502

## Beschreibung

Die Erfindung betrifft einen Schraubanker zum Befestigen von Anbauteilen in Beton oder Mauerwerk mit einem Schaft, der ein Außengewinde aufweist. Ein solcher Schraubanker ist beispielsweise aus der DE 10 2006 003 172 A1 bekannt.

Ein Schraubanker ist in der Regel ein einstückiges Bauteil, bei dem das Gewinde auf den Schaft des Schraubankers als Außengewinde aufgewalzt ist. Das Gewinde sollte eine sehr hohe Härte haben, um ein problemloses Furchen eines Innengewindes in ein vorgebohrtes Loch in Beton oder Mauerwerk zu ermöglichen. Als Werkstoff kommt deshalb ein härtbarer Stahl hohen Kohlenstoffgehaltes in Frage. Solche Stähle lassen sich nur sehr schlecht umformen. Das Gewindewalzen ist somit sehr aufwendig.

Der Schaft des Schraubankers trägt in montiertem Zustand hohe Lasten und ist dabei auf Zug und Biegung dauerwechselbeansprucht. Als Werkstoff kommt hier ein zäher, niedrig gekohlter Baustahl in Betracht.

Wenn mit Korrosionsangriff zu rechnen ist, wie bei Anwendungen des Schraubankers im Außenbereich aufgrund von Witterungseinflüssen, ist ein korrosionsbeständiger Stahl einzusetzen.

Die genannten Anforderungen sind zum Teil gegensätzlich und deshalb nur mit sehr wenigen, teuren Werkstoffen erfüllbar.

Bei einem aus der DE 812 487 C bekannten Schraubanker der eingangs genannten Art ist vorgesehen, dass das Außengewinde von einer Wendel in Gestalt eines Metalldrahtes gebildet, der zum Teil in einer rillenförmigen Vertiefung im Umfang eines aus Preßstoff bestehenden Schaftes eingebettet und durch Pressung mittels eines Preßvorganges darin formschlüssig gehalten ist.

Aus der US 1,181,972 A ist ein Schraubanker mit einem Schaft bekannt, dessen Außengewinde von einer auf den glatten Außenumfang des Schafts gewickelten ersten Wendel gebildet ist, wobei ein gleichbleibender Abstand zwischen den Windungen der ersten Wendel von einer ebenfalls auf den glatten Außenumfang des Schaftes gewickelten zweiten Wendel geringerer Stärke als die erste Wendel gewährleistet wird.

Ferner ist aus der US 2004/258 502 A1 ein Schraubanker mit zwei darin eingearbeiteten unterschiedlichen Außengewinden bekannt, zwischen denen eine ihrerseits in ein Innengewinde in einem Substrat eingreifende Wendel eingeklemmt wird.

Der Erfindung liegt die Aufgabe zugrunde, einen Schraubanker der eingangs beschriebenen Art so auszubilden, dass eine verbesserte formschlüssige Verbindung zwischen Schaft und Wendel geschaffen wird.

Zur Lösung dieser Aufgabe dient Anspruch 1.

Dank der erfindungsgemäßen Aufteilung des Schraubankers in zwei Teile, nämlich in den lastaufnehmenden Schaft einerseits und die gewindefurchende Wendel andererseits, können für die Herstellung dieser beiden Teile jeweils an die speziellen Anforderungen optimal angepaßte Werkstoffe ausgewählt werden, so dass diese Anforderungen optimal erfüllt werden können. Im Vergleich zu einem mit üblichen Außengewinde versehenen Schraubanker (DE 10 2006 003 172 A1) ist die Fertigung vereinfacht, weil ein Gewindewalzen eines schwer umformbaren Werkstoffes entbehrlich ist.

Die Wendel ist erfindungsgemäß formschlüssig mit dem Außenumfang des Schaftes dadurch verbunden, dass Vorsprünge am einen Teil, z.B. der Wendel, mit Ausnehmungen am anderen Teil, z.B. dem Schaft, formschlüssig zusammenwirken.

Die formschlüssige Verbindung gemäß der Erfindung benötigt keinerlei zusätzlichen Teile oder aufwendigen Arbeitsgänge bei Herstellung der Verbindung.

Ist kein Korrosionsangriff zu befürchten, kann der Schaft gemäß Anspruch 7 aus einem Werkstoff hoher Zug-, Biege- und Dauerfestigkeit, wie einem gewöhnlichen Baustahl, und die Wendel aus einem Werkstoff hoher Härte, wie einem härtbaren Stahl mit hohem Kohlenstoffgehalt bestehen.

Ist eine Verwendung des Schraubankers im Außenbereich vorgesehen, in welchem Korrosionsangriff aufgrund von wechselnden Witterungsbedingungen zu erwarten ist, kann der Schaft gemäß Anspruch 8 vorzugsweise aus einem korrosionsbeständigen Werkstoff, wie einem korrosionsfesten Stahl bestehen, und die Wendel kann zweiteilig ausgeführt sein, nämlich mit einem aus zwei bis drei Windungen bestehenden Anschnittbereich aus einem Werkstoff hoher Härte, wie einem Stahl mit hohem Kohlenstoffgehalt, und mit einem tragenden Bereich aus einem korrosionsfesten Federstahl.

Die Erfindung ist auch auf eine Schraube mit Schaft und Innengewinde anwendbar, bei der das Innengewinde von einer gesonderten Wendel gebildet ist, welche in ein Sackloch oder Durchgangsloch im Schaft einsetzbar und ähnlich befestigbar ist wie oben beschrieben, z.B. in einer Spiralnut am Innenumfang des Sackloches.

Die Erfindung ist im folgenden anhand schematischer Zeichnungen an Ausführungsbeispielen mit weiteren Einzelheiten näher erläutert.

Es zeigen:

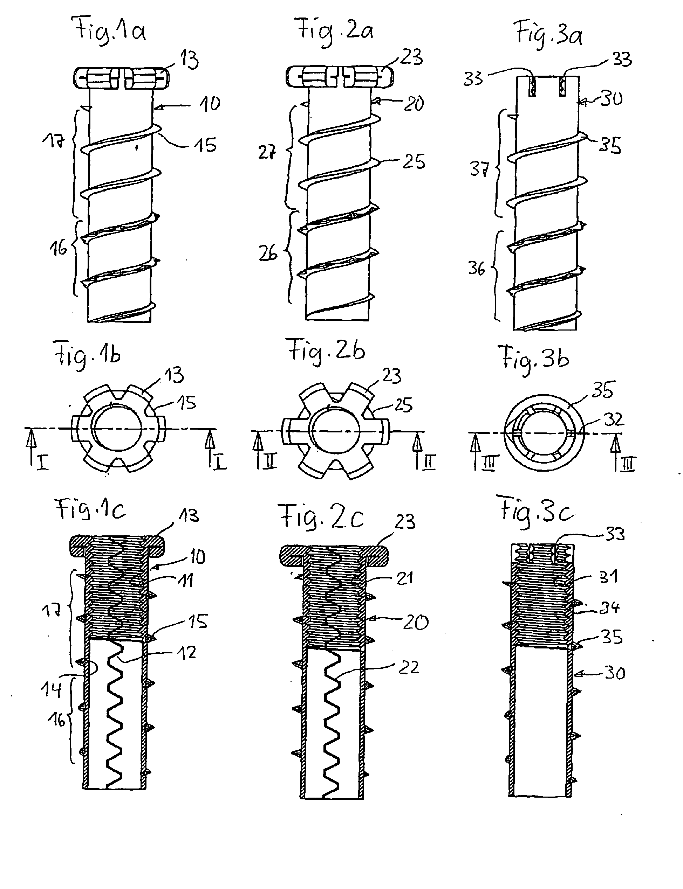

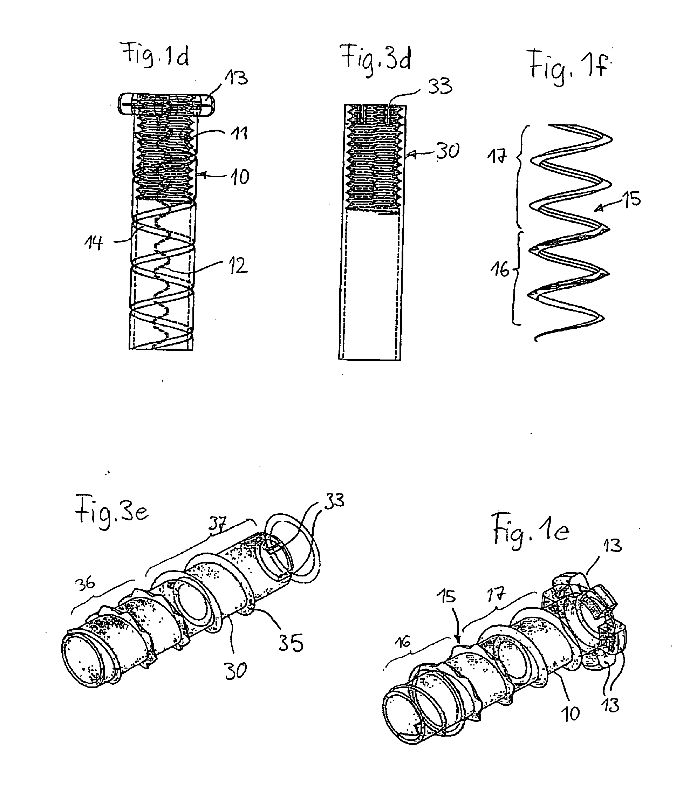

- Fig. 1 bis 3: drei Ausführungen eines Schraubankers , wobei mit dem Buchstaben a jeweils eine Seitenansicht, mit dem Buchstaben b jeweils eine Stirnansicht, mit dem Buchstaben c jeweils ein Axialschnitt nach den Linien I-I, II-II bzw. III-III in den entsprechenden mit b bezeichneten Figuren durch den jeweils fertig montierten Schraubanker aus Schaft und Wendel, mit dem Buchstaben d jeweils ein Axialschnitt durch den zur ersten und dritten Ausführung gehörigen Schaft allein, mit dem Buchstaben e eine perspektivische Darstellung jeweils der ersten und der dritten Ausführung eines fertig montierten Schraubankers , und mit dem Buchstaben f eine Seitenansicht einer bei den genannten drei Ausführungen eingesetzten Wendel bezeichnet sind;

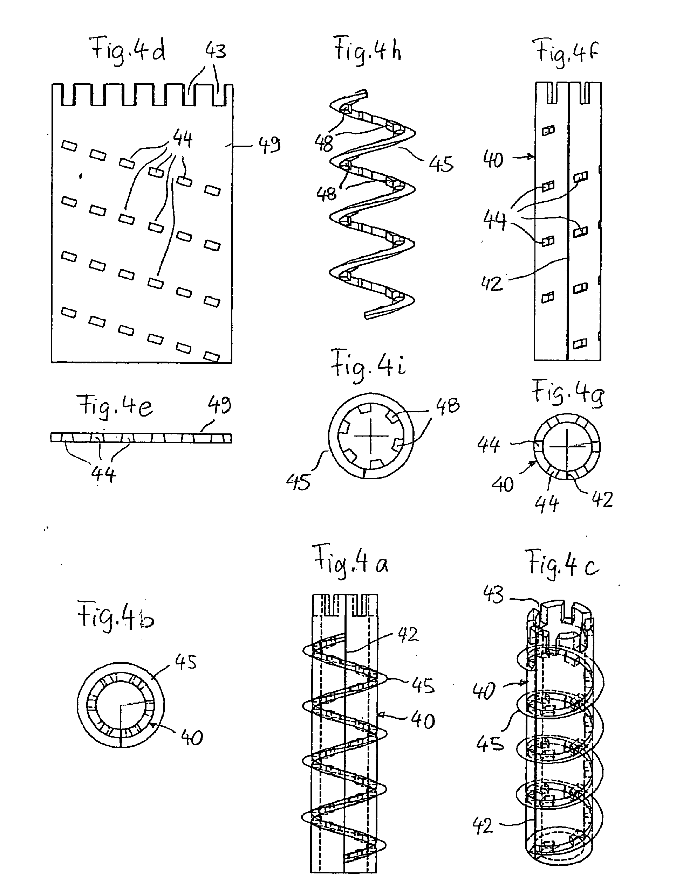

- Fig. 4: eine vierte Ausführung gemäß der Erfindung, nämlich Fig. 4a eine Seitenansicht, Fig. 4beine Stirnansicht, Fig. 4c eine perspektivische Ansicht eines fertig montierten Schraubankers nach der vierten Ausführung, Fig. 4d einen mit Stanzlöchern versehenen Blechzuschnitt für die vierte Ausführung, Fig. 4e eine Stirnansicht dieses Blechzuschnittes, Fig. 4f einen zu einem zylindrischen Schaft gebogenen Zustand des Blechzuschnittes in Seitenansicht, Fig. 4g eine Stirnansicht des zylindrischen Schaftes, Fig. 4h eine bei der vierten Ausführung eingesetzte Wendel in Seitenansicht, und Fig. 4i eine Stirnansicht der Wendel.

Die Ausführungen nach den Figuren 1 bis 3 sind durch die Patentansprüche nicht gedeckt.

Anhand der Figuren 1 a bis 1f sei nun eine erste Ausführung beschrieben. Dabei zeigen die Figuren 1a bis 1c und 1e einen fertig montierten Schraubanker und die Figuren 1d und 1f Ansichten von dessen Einzelteilen, nämlich eines Schaftes (Fig. 1d) und einer darauf zu befestigenden Wendel (Fig. 1f).

Der Schraubanker nach Fig. 1 hat einen hohlen Schaft 10 mit einem Innengewinde 11 zum Einschrauben einer nicht gezeigten Schraube zur Halterung eines ebenfalls nicht gezeigten Anbauteiles. Der Schaft 10 ist aus einem Blechzuschnitt in die gezeigte zylindrische Form gebogen und über seine V-förmigen gezackten Ränder zu einer zick-zack-förmigen Fuge 12 zusammengefügt und über einen umgebördelten Kopf mit sternförmigen Laschen 13 in diesem Zustand gehalten. In den äußeren Umfang des Schaftes 10 ist eine Spiralnut 14 eingeformt, wie am besten aus Fig. 1d ersichtlich ist.

In diese Spiralnut 14 greift eine entsprechend profilierte und gewickelte Wendel 15 ein, die in Fig. 1f separat dargestellt ist. Die Wendel hat einen gezahnten Anschnittbereich 16, der sich über zwei bis drei Windungen der Wendel erstreckt, sowie einen zahnlosen tragenden Bereich 17, der sich über den Rest der Wendel erstreckt (vgl. Fig. 1f und Fig. 1e). Die beiden Bereiche können aus zwei gesonderten Teilen (nicht gezeichnet) aus unterschiedlichen Werkstoffen bestehen, nämlich der Anschnittbereich 16, der zum Gewindefurchen in einem vorgebohrten Loch im Beton oder Mauerwerk dient, aus einem gehärteten Stahl mit hohem Kohlenstoffgehalt, und der tragende Bereich 17, der zur Lasteinleitung der von dem Schraubanker zu übertragenden Belastung in dem Beton dient, aus einem zähen, korrosionsfesten Federstahl.

Der Blechzuschnitt des Schaftes 10 selbst kann ebenfalls aus einem Stahl hoher Zähigkeit, und ggf. hoher Korrosionsbeständigkeit bestehen. Die Wendel 15, deren Innendurchmesser ein geringes Untermaß bezüglich des Schaft-Außendurchmessers hat, wird unter leichtem Aufspreizen auf den Umfang des Schaftes aufgeschoben, bis sie mit ihren Windungen in die Spiralnut 14 auf dem äußeren Umfang des Schaftes einrastet, so dass die Wendel ohne zusätzliche Maßnahmen formschlüssig auf dem Schaft gehalten ist.

Der aus Schaft 10 und Wendel 15 erzeugte Schraubanker ist einfach herstellbar und erfüllt dadurch, dass der Schaft 10 einerseits und die Wendel 15 andererseits jeweils aus den für ihre spezifischen Zwecke besonders geeigneten, unterschiedlichen Werkstoffen hergestellt sind, die Anforderungen an den Schraubanker in optimaler Weise.

Es versteht sich, dass der Schraubanker anstatt eines hohlen Schaftes 10 auch einen Vollschaft haben kann, der ebenso wie bei der ersten Ausführung mit einer Spiralnut zur formschlüssigen Verbindung mit der Wendel gestaltet sein kann.

In den Figuren 2a, 2b und 2c ist ein Schraubanker nach einer zweiten Ausführung mit entsprechenden, jedoch um die Zahl 10 erhöhten Bezugszahlen dargestellt. Diese zweite Ausführung unterscheidet sich von der ersten Ausführung dadurch, dass die Wendel 25 nicht formschlüssig mit dem Schaft 20 verbunden ist, sondern durch Verschweißen oder Verkleben auf dem Umfang des hier glattwandigen Schaftes. Im übrigen ist dieser Schraubanker praktisch gleich wie der Schraubanker der ersten Ausführung gestaltet, so dass sich eine weitergehende Beschreibung erübrigt.

In den Figuren 3a bis 3e ist ein Schraubanker gemäß einer dritten Ausführung dargestellt, wobei in den Zeichnungen wiederum um die Zahl 10 erhöhte, im übrigen entsprechende Bezugszahlen für gleiche oder gleichwirkende Teile wie bei den übrigen Ausführungen verwendet sind. Der Schaft 30 der dritten Ausführung hat keinen über den Außendurchmesser der Wendel 35 hinausragenden Kopf sondern lediglich axiale Schlitze 33, in welche ein Eindrehwerkzeug eingreifen kann. Auf diese Weise ist der Schraubanker vollständig in dem Beton oder Mauerwerk versenkbar. Die Wendel 35 ist in diesem Fall gleich wie bei der ersten Ausführung ausgebildet und greift formschlüssig in eine Spiralnut 34 auf dem äußern Umfang des Schaftes 30 ein.

Wie bei den beiden vorherigen Ausführungen enthält der Schraubanker in seinem oberen Bereich ein Innengewinde zum Einschrauben einer Halterungsschraube (nicht gezeigt) für Anbauteile.

Die Figuren 1d und 3d zeigen noch einmal gesondert den Schaft 10 bzw. 30 der ersten Ausführung und der dritten Ausführung eines Schraubankers . Insbesondere wird aus Fig. 1d die Gestaltung der Spiralnut 14 deutlich.

In den Figuren 4a, 4b und 4c ist ein Schraubanker in einer vierten Ausführung in montiertem Zustand der Wendel 45 gezeigt. Die Figuren 4d und 4e zeigen den zugehörigen Schaft in verschiedenen Fertigungsstufen, und die Fig. 4h zeigt die bei der vierten Ausführung eingesetzte Wendel 45. Diese Wendel hat in gleichmäßigen Abständen angeordnete Vorsprünge 48, die von ihrem inneren Umfang radial nach innen ragen. Der Schaft 40 ist ausgehend von einem Blechzuschnitt (Fig. 4d und 4e) zu einer zylindrischen Konfiguration gemäß den Figuren 4f und 4g gebogen, in der seine beiden Seitenkanten in einer axialen Trennfuge 42 aneinanderstoßen. Der Blechzuschnitt 49 hat in schrägen Reihen in gleichmäßigen Abständen angeordnete Stanzlöcher 44, deren Abstände denjenigen der Vorsprünge 48 der Wendel 45 entsprechen. In dem in den Figuren 4a bis 4c gezeigten montierten Zustand greifen die Vorsprünge 48 in die Stanzlöcher 44 ein, so dass eine formschlüssige Verbindung zwischen der Wendel 45 und dem aus dem Blechzuschnitt 49 gewickelten Schaft 40 geschaffen ist.

Am Kopfende des Blechzuschnitts 49 sind wie bei der Ausführung nach Fig. 3 Schlitze 43 vorgesehen, die in zylindrischem Zustand des Schaftes 40 zum Einstecken eines Eindrehwerkzeuges dienen.

Wenngleich ein Innengewinde zum Einschrauben einer Halterungsschraube für Anbauteile hier nicht dargestellt ist, kann es selbstverständlich auch in diesem Fall vorgesehen sein.

## Patentansprüche

1. Schraubanker zum Befestigen von Anbauteilen in Beton oder Mauerwerk mit einem Schaft (40), der ein Außengewinde aufweist, das von einer vom Schaft (40) gesonderten Wendel (45) gebildet ist, wobei die Wendel mit dem Umfang des Schaftes formschlüssig verbunden ist, **dadurch gekennzeichnet, dass** die Wendel (45) der der Schaft (40) mit in regelmäßigen Abständen angeordneten Ausnehmungen (44) und der Schaft (40) oder die Wendel (45) mit dazu passenden Vorsprüngen (48) versehen sind, welche in die Ausnehmungen (44) einrastbar sind.

2. Schraubanker nach Anspruch 1 , **dadurch gekennzeichnet, dass** der Schaft (40) von einem Rohrstück gebildet ist.

3. Schraubanker nach Anspruch 2, **dadurch gekennzeichnet, dass** in dem Rohrstück ein Innengewinde zum Einschrauben einer Montageschraube für ein Anbauteil vorgesehen ist.

4. Schraubanker nach einem der Ansprüche 2 oder 3, **dadurch gekennzeichnet, dass** das Rohrstück (40) aus einem biegbaren Blechzuschnitt (49) geformt ist.

5. Schraubanker nach Anspruch 4, **dadurch gekennzeichnet, dass** die Ausnehmungen (44) in den Blechzuschnitt (49) eingestanzt sind und die an der Wendel (45) vorgesehenen Vorsprünge (48) in die Ausnehmungen (44) eingreifen.

6. Schraubanker nach Anspruch 2, **dadurch gekennzeichnet, dass** in das Rohrstück ein Bolzen eingepresst ist, der aus Kunststoff bestehen kann.

7. Schraubanker nach einem der Ansprüche 1 bis 6, **dadurch gekennzeichnet, dass** der Schaft (40) aus einem Werkstoff hoher Zug-, Biege- und Dauerfestigkeit, wie einem gewöhnlichen Baustahl, und die Wendel (45) aus einem Werkstoff hoher Härte, wie einem härtbaren Stahl mit hohem Kohlenstoffgehalt, besteht.

8. Schraubanker nach einem der Ansprüche 1 bis 6, **dadurch gekennzeichnet, dass** der Schaft (40) aus einem korrosionsbeständigen Werkstoff, wie einem korrosionsfesten Stahl, besteht und die Wendel einen Anschnittbereich aus einem Werkstoff hoher Härte, wie einem Stahl mit hohem Kohlenstoffgehalt, und einen tragenden Bereich aus einem korrosionsfesten Federstahl aufweist.

## Claims

1. Screw anchor for fastening add-on parts in concrete or brickwork comprising a shaft (40), which encompasses an external thread, which is formed by a spiral (45), which is separate from the shaft (40), wherein the spiral is connected to the outer periphery of the shaft in a positive manner **characterized in that** the spiral (45) and the shaft (40), respectively, are provided with recesses (44) arranged at regular distances and **in that** the shaft (40) and the spiral (45), respectively, are provided with matching projections (48), which can engage with the recesses (44).

2. Screw anchor according to claim 1, **characterized in that** the shaft (40) is formed by a pipe section.

3. Screw anchor according to claim 2, **characterized in that** within the shaft an internal thread for screwing in a mounting screw for an add-on part is provided.

4. Screw anchor according to one of claims 2 and 3, **characterized in that** the pipe section (40) is formed from a bendable blank of sheet metal (49).

5. Screw anchor according to claim 4, **characterized in that** the recesses (44) are punched into the blank of sheet metal (49) and **in that** the projections (48) provided at the spiral (45) engage with the recesses (44).

6. Screw anchor according to claim 2, **characterized in that** a bolt, which can consist of plastic, is pressed into the pipe section.

7. Screw anchor according to one of claims 1 to 6, **characterized in that** the shaft (40) consists of a material comprising high tensile strength, flexural strength and fatigue strength, such as a common construction steel, and **in that** the spiral (45) consists of a material comprising a high degree of hardness, such as hardenable steel comprising a high carbon content.

8. Screw anchor according to one of claims 1 to 6, **characterized in that** the shaft (40) consists of a corrosion-resistant material, such as corrosion-resistant steel, and the spiral encompasses a cutting part made of a material comprising a high degree of hardness, such as steel comprising a high carbon content, and a supporting part made of corrosion-resistant spring steel.

## Revendications

1. Vis d'ancrage pour la fixation d'éléments rapportés dans du béton ou dans un ouvrage de maçonnerie comprenant une tige (40) qui présente un filetage extérieur, qui est formé par une hélice (45) particulière sur la tige (40), l'hélice étant reliée en complémentarité de forme avec le pourtour de la tige, **caractérisée en ce que** l'hélice (45) ou la tige (40) sont munies d'évidements (44) disposés à intervalles réguliers et la tige (40) ou l'hélice (45) sont munies des avancées (48) correspondantes qui peuvent s'engrener dans les évidements (44).

2. Vis d'ancrage selon la revendication 1 **caractérisée en ce que** la tige (40) est formée d'un morceau de tuyau.

3. Vis d'ancrage selon la revendication 2 **caractérisée en ce qu'**un filetage intérieur est prévu dans le morceau de tuyau pour le vissage d'une vis de montage pour une partie rapportée.

4. Vis d'ancrage selon l'une des revendications 2 ou 3 **caractérisée en ce que** le morceau de tuyau (40) est formé à partir d'un flan de tôle (49) pliable.

5. Vis d'ancrage selon la revendication 4 **caractérisée en ce que** les évidements (44) sont emboutis dans le flan de tôle (49) et que les avancées (48) prévues sur l'hélice (45) s'engrènent dans les évidements (44).

6. Vis d'ancrage selon la revendication 2 **caractérisée en ce qu'**un boulon, qui peut être constitué de matière synthétique, est enfoncé dans le morceau de tuyau.

7. Vis d'ancrage selon l'une des revendications de 1 à 6 **caractérisée en ce que** la tige (40) est conçue dans un matériau de résistances à la traction, à la flexion et à la fatigue élevées, comme un acier de construction habituel, et l'hélice (45) est constituée d'un matériau de dureté élevée, comme un acier durcissable avec une forte teneur en carbone.

8. Vis d'ancrage selon l'une des revendications de 1 à 6 **caractérisée en ce que** la tige (40) est dans un matériau résistant à la corrosion comme un acier inoxydable, et que l'hélice présente une zone de contact dans une matière de dureté élevée, comme un acier comprenant une forte teneur en carbone, et un domaine porteur en acier à ressort résistant à la corrosion.
